Europäisches Patentamt

European Patent Office

Office européen des brevets

(11) Veröffentlichungsnummer: **0 025 015**
**A2**

(12) # EUROPÄISCHE PATENTANMELDUNG

(21) Anmeldenummer: **80810246.1**

(22) Anmeldetag: **07.08.80**

(51) Int. Cl.³: **C 09 J 3/14**
**C 08 L 51/00, C 08 F 285/00**
**C 08 F 279/02**

(30) Priorität: **13.08.79 US 65805**

(43) Veröffentlichungstag der Anmeldung:
**11.03.81 Patentblatt 81/10**

(84) Benannte Vertragsstaaten:
**DE FR GB IT SE**

(71) Anmelder: **CIBA-GEIGY AG**
**Patentabteilung Postfach**
**CH-4002 Basel(CH)**

(72) Erfinder: **Foreman, Paul B.**
**11305 Nixon Road**
**Grand Ledge Michigan 48837(US)**

(54) **Verfahren zum Kleben von mit zinkhaltigem organischem Material beschichtetem Substrat.**

(57) Ein mit einem zinkreichen organischen Material beschichtetes Substrat wird mit einem zweiten Substrat verklebt. Die Verklebung erfolgt durch Härtung eines Klebmittels, welches ein polymerisierbares Vinylmonomer, ein Acrylnitril-Butadien -Styrol-Polymer, einen freie Radikale erzeugenden Polymerisationskatalysator, ein mono- oder polyfunktionelles organisches Sulfonylchlorid und gegebenenfalls einen Beschleuniger enthält. Dieses Verklebungsverfahren wird insbesondere beim Verbinden von mit einem zinkreichen Ueberzug versehenen Stahlblechen in der Automobilindustrie verwendet, da damit Korrosion verhindert werden kann.

EP 0 025 015 A2

Croydon Printing Company Ltd.

- 1 -

3-12472/+

Verfahren zum Kleben von mit zinkhaltigem organischem Material beschichtetem Substrat.

Zur Verhinderung von Korrosionen werden in der Automobilindustrie zinkreiche Ueberzugsmittel, insbesondere zum Beschichten von Stahlblechen für korrosionsanfällige Automobilteile, verwendet. Derart beschichtete Bleche sind wohl schweissbar, jedoch schlecht mit Acrylatklebern, welche üblicherweise in der Automobilindustrie zum Verkleben von Blechen, z.B. aus Aluminium oder Stahl, eingesetzt werden, zu verkleben. Diese Acrylatkleber, insbesondere diejenigen, welche ohne Wärmezufuhr härten, sind zum Verbinden von vielen Substraten mit öliger Oberfläche geeignet.

Die US-Patentschrift 3 591 438 offenbart einen polymerisierbaren, anaeroben Acrylatkleber und eine Grundierungsmasse aus einem Amin-Aldehyd-Kondensationsprodukt und einem Reduktionsmittel.

Aus der US-Patentschrift 3 890 407 ist eine Klebstoffmischung aus einer Lösung eines chlorsulfonierten oder chlorierten Polyäthylens zusammen mit einem organischen Sulfonylchlorid in Vinylmonomeren bekannt. Der Hauptnachteil dieser hochchlorierten Mischungen ist deren schlechte Hitzewiderstandsfähigkeit. Zersetzung unter Abgabe korrodierender Zersetzungsprodukte tritt bereits bei 150°C ein. Insbesondere bei der Automobilherstellung werden aber Kleber benötigt, welche den Lackeinbrenn-Temperaturen von 200-240°C zu widerstehen vermögen.

Die GB-Patentschrift 1 513 427 erweitert die Angaben in der US-Patentschrift 3 890 407, indem die Verwendung von chlorsulfonierten Polymeren im allgemeinen oder Polymeren zusammen mit niedermolekularen organischen Sulfonylchloriden beschrieben wird. Die verwendeten Mischungen härten beim Verkleben von entfettetem, sandgestrahltem Stahl sehr langsam und ergeben schwache Verklebungen. Insbesondere erschweren oder verhindern Oberflächen, welche mit einem zinkreichen organischen Ueberzug beschichtet sind, die Härtung mit freien Radikalen.

Es wurde nun gefunden, dass man diese Nachteile mit Hilfe des erfindungsgemässen Verfahrens überwinden kann. Die vorliegende Erfindung bezieht sich auf ein Verfahren zum Verbinden eines mit einem zinkreichen organischen Ueberzug versehenen Substrates, wobei der Ueberzug 80-95 Gewichtsprozent Zink enthält, mit einem zweiten Substrat, indem man die Substrate durch Verklebung vereinigt. Das Verfahren ist dadurch gekennzeichnet, dass man die Substrate durch Härten eines Klebmittels, welches, bezogen auf das Klebmittel,

a)      30-90 Gew.% mindestens eines polymerisierbaren Vinylmonomeren,

b)      10-50 Gew.% eines Acrylnitrils-Butadien-Styrol-Polymeren,

c)      0,05-10 Gew.% eines freie Radikale erzeugenden Polymerisationskatalysators,

d)      0,1-15 Gew.% eines mono- oder polyfunktionellen organischen Sulfonylchlorids und

e)      0-35 Gew.% eines Beschleunigers, enthält, verklebt.

Geeignete polymerisierbare Vinylmonomere a) sind z.B. die folgenden und deren Mischungen: Methylmethacrylat, Aethyläthacrylat, Acrylnitril, Methacrylnitril, Methylacrylat, Aethylacrylat, Butylmethacrylat, Cyclohexylmethacrylat, Hexylmethacrylat, 2-Aethylhexylmethacrylat, Laurylmethacrylat, Butylacrylat, Cyclohexylacrylat, Hexylacrylat, 2-Aethylhexylacrylat, Laurylacrylat, Methacrylsäure, Acrylsäure, Glycidylmethacrylat, Itaconsäure, Acrylate und Methacrylate von Aethylenglykol und höheren Diolen, Acrylamid und Methacrylamid, ferner halogenierte Monomere, wie Vinylidenchlorid, Chlorstyrol, 2,3-Dichlor-1,3-butadien und 2-Chlor-1,3-butadien, im weiteren Styrol und mono- und Polyalkylstyrole, wie Methylstyrol, Dimethylstyrol, Aethylstyrol oder tertiär-Butylstyrol. Bevorzugt sind Acryl- und Methacrylsäure, deren Ester, insbesondere die niedrigen Acrylate bzw. Methacrylate und die Acrylate bzw. Methacrylate von Dialkoholen, wie von Aethylenglykol und 1,3-Butandiol, oder Mischungen davon. Am bevorzugtesten sind Methacrylsäure, Methylmethacrylat, Aethylmethacrylat, 1,3-Butandioldimethacrylat, Aethylenglykoldimethacrylat und Mischungen davon. Bevorzugt betragen die Mengen von Vinylmonomeren zwischen 50 und 80 Gew.%.

Als Bestandteil b) kann ein Acrylnitril-Butadien-Styrol-Polymer (ABS-Polymer) verwendet werden, welches auf Polyblend-Kautschuk in einer Menge von 10-40 Gew.%, insbesondere 25-40 Gew.% gepfropft ist. Vorzugsweise enthält der Klebstoff zwischen 25 und 35 Gew.% an ABS-Polymer. Dieses kann in Pulver- oder Tablettenform vorliegen.

Irgendein freie Radikale erzeugender Polymerisationskatalysator (c) kann verwendet werden. Bevorzugt werden organische Peroxide, Hydroperoxide, Persäuren oder deren Ester eingesetzt, beispielsweise Cumolhydroperoxid oder Benzoylperoxid. Vorzugsweise beträgt deren Menge 0,05 bis 3 Gew.%.

Die als Bestandteil d) verwendeten Sulfonylchloride sind vorzugsweise Alkylsulfonylchloride, aromatische Sulfonylchloride oder Sulfonylchloride, die ein Heteroatom enthalten. Bevorzugte Alkylsulfonylchloride enthalten 1-12 Kohlenstoffatome, wie Methansulfonylchlorid oder Butansulfonylchlorid. Bevorzugte aromatische Sulfonylchloride enthalten 6-12 Kohlenstoffatome, wie Benzolsulfonylchlorid, Toluolsulfonylchlorid oder m-Benzoldisulfonylchlorid.

Bevorzugte Sulfonylchloride, die ein Heteroatom enthalten, sind Alkyl- oder Arylsulfonylchloride mit einem Substituenten, der ein Heteroatom aufweist, wie Nitrobenzolsulfonylchlorid oder N-Acetylsulanilylchlorid, ferner mit einem heterocyclischen Substituenten, wie Maleinimidobenzolsulfonylchlorid, Succinimidobenzolsulfonyl-chlorid, Phthalimidobenzolsulfonylchlorid. Der Sulfonylchloridteil kann direkt mit einem heterocyclischen Ring verknüpft sein, wie 2-Acetamido-4-methyl-5-thiazol-sulfonylchlorid. Bevorzugt enthält das Klebmittel 0,1 bis 5, insbesondere 0,2 bis 3, Gew.% an organischem Sulfonylchlorid.

Geeignete Beschleuniger e) sind z.B. sekundäre oder tertiäre Amine oder Aldehyd-Amin-Kondensationsprodukte, meist von aliphatischen Aldehyden mit aliphatischen oder aromatischen Aminen. Bevorzugt wird das Kondensationsprodukt aus Butyraldehyd und Anilin ("Vanax 808" der Vanderbilt Co.) und aus Butyraldehyd und Butylamin ("Vanax 833" der Vanderbilt Co.).

Falls der Klebstoff keinen Beschleuniger enthält, erfolgt die Härtung in der Zeit von einigen Minuten bis zu einigen Stunden bei einer Temperatur von 80-250°C. Falls ein Beschleuniger verwendet wird, liegt der Klebstoff vor seinem Gebrauch in Form eines Zweikomponentensystems vor, d.h. der Beschleuniger wird von den übrigen Bestandteilen bis unmittelbar vor der Verklebung getrennt aufbewahrt. Die Härtung erfolgt dann bei Raumtemperatur ohne Zufuhr von Wärme und dauert etwa 1 bis 24 Stunden. Die Härtungszeiten und -temperaturen hängen von der Art der Klebstoffzusammensetzung ab. Die besten Zeiten und Temperaturen für spezifische Klebmittel können leicht ermittelt werden.

Der Klebstoff bzw. die Klebstoffkomponente enthält vorzugsweise weitere Stoffe, welche die Eigenschaften der Verklebungen, ihre Handhabung beim Verkleben oder die Geschwindigkeit des Verklebens noch weiter verbessern können. Dazu gehören insbesondere die in den folgenden Punkten erwähnten Stoffe:

a) Verdampfungsinhibitor, 0,1-10 Gew.%, insbesondere 1-10 Gew.%, z.B. Chlorparaffine mit 30-70, insbesondere 50-60, Gew.% Chlor. Diese Stoffe dienen zur Verlängerung der sogenannten offenen Zeit, d.h. der Zeit zwischen dem Aufbringen des Klebstoffes bzw. der Klebstoffbestandteile auf die zu verklebenden Flächen und dem Zusammenfügen dieser Flächen;

b) Stabilisator (Antioxidans) zur Verlängerung der Lagerbeständigkeit des Klebstoffes bzw. der Klebstoffkomponente, 0,1-10 Gew.%, gelegentlich auch nur 0,1-2 Gew.%, wobei Hydrochinon, Chinon oder 2,6-Di-tert.-Butyl-p-cresol (Jonol) in Frage kommen. Im Falle von Einkomponentenklebstoffen, d.h. von Systemen die heiss gehärtet werden, sollte kein Stabilisator zugemischt werden, weil anscheinend eine Reaktion zwischen den Peroxiden und dem Stabilisator auftritt, die die Heisshärtung verhindern kann;

c) Haftvermittler, 0,1-10 Gew.%, insbesondere bis 2 Gew.%, wobei Silane in Betracht kommen, z.B. γ-Methacryloxypropyltrimethoxysilan;

d) Epoxidharz, 0,1-10 Gew.%, zur Verbesserung der Eigenschaften des gehärteten Klebmittels. Es eignen sich bekannte flüssige Epoxidharze auf Bisphenol A-Basis;

e) Pigmente oder Farbstoffe, 0,1-10 Gew.%, dienen zum besseren Sichtbarmachen der mit dem Klebstoff bzw. der Klebstoffkomponente bestrichenen Oberflächen. Es können bekannte anorganische oder organische Pigmente eingesetzt werden;

f) die Zugabe von die Wirkung des Beschleunigers verstärkenden Stoffen, wie organischen Salzen von Uebergangsmetallen, z.B. Vanadiumtrisacetylacetonat oder Kupferoleat, vergrössert die Härtungsgeschwindigkeit in Zweikomponentensystemen und bewirkt, dass die Menge des organischen Sulfonylchlorids,die für den Klebstoff benötigt wird, verringert werden kann.

Der zinkreiche Ueberzug enthält im allgemeinen einen chlorierten Gummi, Phenoxy- oder Epoxidharz als Bindemittel, gewöhnlich Epoxidharz. Bei den damit beschichteten Substraten handelt es sich normalerweise um Metalle, wie Stahl, Aluminium, Kupfer oder Legierungen davon. Da mit der Beschichtung die Verhinderung von Korrosion bezweckt wird, kommt als Substrat Stahl besonders in Betracht. Das am weitesten verbreitete beschichtete Material ist "Zincrometal" (hergestellt von der Diamond Shamrock Corporation). Dieses Produkt ist in der Zeitschrift "Modern Paints and Coatings" vom September 1976, auf den Seiten 21 bis 26, beschrieben. Danach ist "Zincrometal" aus einem Zweischichtensystem auf Stahl zusammengesetzt. Als Grundschicht dient eine geschützte Zusammensetzung auf wässeriger Basis aus Chromsäure, Zinkstaub und anderen Chemikalien. Sie ist im wesentlichen frei von Harzen und wird auf den blanken Stahl aufgebracht und durch Erhitzen in eine unlösliche Schicht umgewandelt. Drauf wird eine schweissbare, zinkreiche Schicht aus einem linearen Epoxidharz und Zinkstaub, der in grosser Menge im Harz enthalten ist, aufgebracht. Diese Schicht auf Basis von organischem Lösungsmittel erfordert ebenfalls Erwärmung. Aehnliche Produkte, bei welchen eine Beschichtung aus zinkreichem synthetischem Harz auf einer Seite von konventionell zweiseitig galvanisiertem Stahlblech aufgebracht wird, können für das erfindungsgemässe Verfahren ebenfalls verwendet werden.

Das zweite Substrat kann auch ein so beschichtetes Material sein, aber auch ein Metall, wie Stahl, Aluminium, Kupfer oder Legierungen davon, ferner Polymere, wie ABS-Polymere, Polyamide, Polyurethane, Polyester und faserverstärkte Kunststoffe, im weiteren auch Holz, Papier, Glas und Keramik.

Wenn man das Klebmittel als Einkomponentensystem, d.h. ohne Zusatz eines Beschleunigers, verwendet, bringt man das Klebmittel auf das eine oder beide zu verklebenden Substrate auf, fügt diese zusammen und erwärmt sie zur Härtung des Klebmittels während einiger Minuten bis zu mehreren Stunden auf 80-250°C.

In den folgenden Beispielen 1-8 wird das Verkleben mit Klebemitteln, die einen Beschleuniger enthalten, beschrieben. In der ersten
Ausführungsform wird ein Substrat mit dem Vinylmonomeren, dem ABS-
Polymeren, dem Katalysator und dem organischen Sulfonylchlorid, das
andere mit dem Beschleuniger beschichtet, worauf die beiden Substrate
zusammengefügt werden und die Härtung des Klebmittels ohne Wärmezufuhr
erfolgt. In einer zweiten Ausführungsform werden ein oder beide zu
verklebenden Substrate mit dem Vinylpolymeren, dem ABS-Polymeren, dem
Katalysator und dem organischen Sulfonylchlorid beschichtet, worauf
man den Beschleuniger auf diese Schicht oder Schichten aufbringt und
die Substrate zusammenfügt. Die Verklebung erfolgt auch hier ohne
Wärmezufuhr. In einer dritten Ausführungsform werden ein oder beide
der zu verklebenden Substrate mit dem Beschleuniger ohne Lösungsmittel
oder mit einem inerten Lösungsmittel, wie einem Methylmethacrylat-
Butylacrylat-Copolymeren in Methyläthylketon, beschichtet. Auf das
eine oder auf beide so beschichteten Substrate werden die übrigen
Bestandteile des Klebmittels aufgebracht. Nach dem Zusammenfügen der
Substrate härtet die Verklebung ohne Wärmezufuhr. In einer vierten
Ausführungsform wird der Beschleuniger unmittelbar vor der Verklebung
mit den übrigen Bestandteilen des Klebmittels in dieses eingemischt.
Die Mischung wird auf das eine oder beide der zu verklebenden Substrate aufgebracht; diese werden zusammengefügt, und ohne Zufuhr von
Wärme wird die Verklebung gehärtet.

Die Abbindungszeit für diese Zweikomponentensysteme hängt
von der Klebmittelzusammensetzung ab; gewöhnlich beträgt sie 5 bis
10 Minuten. Ebenso variiert die eigentliche Härtungszeit je nach der
Klebmittelzusammensetzung. Die Zeit, in welcher die besten physikalischen Eigenschaften der Klebung erzielt werden, kann leicht ermittelt
werden. Das Einkomponentensystem bietet den Vorteil einer leichten
Handhabung. Es ist daher sehr geeignet für die Anwendung in automatischen Verteilapparaten. Die erzielten Verklebungen weisen ausgezeichnete Bindungskräfte auf, d.h.ausgezeichnete Zug- und Schälfestigkeiten, Hitze- und Wasserresistenz sowie Schlagzähigkeit. Diese Eigenschaften zeigen sich dadurch, dass Brüche der geleimten Stücke nicht
in der Klebschicht oder zwischen einem Substrat und der Klebmittelschicht, sondern in der zinkreichen Schicht oder zwischen dieser und
dem darunterliegenden Substrat erfolgen.

Beispiel 1:   Eine Klebstoffmischung wird durch Lösen der folgenden
Bestandteile in einem verschlossenen Glasgefäss hergestellt: 0,5 g
(0,55 Gew.%) p-Toluolsulfonylchlorid werden in einer Mischung aus 50 g
(54,65 Gew.%) Methylmethacrylat, welche 22-28 ppm Hydrochinon als
Inhibitor enthält, 10 g (10,43 Gew.%) Methacrylsäure, das 225-275 ppm
4-Methoxyphenol enthält, 5 g (5,46 Gew.%) Aethylenglykoldimethacrylat
und 1 g (1,09 Gew.%) Cumolhydroperoxid zugesetzt. Zu dieser Mischung
gibt man 25 g (27,32 Gew.%) eines im Handel erhältlichen ABS-Polymeren.
Die Mischung wird während einigen Stunden gerührt, bis das Polymer
gleichmässig dispergiert ist. Die Viskosität bei 25°C ist 75 Pa s
(mit dem Brookfield-Viscosimeter gemessen, Spindel 17,8 cm, 20 Umdrehungen pro Minute).

In gleicher Weise werden weitere Klebstoffzusammensetzungen
hergestellt, wobei andere Sulfonylchloride verwendet werden. Die
Gewichte der Bestandteile sind so berechnet, dass sich stets dieselbe
Gesamtmenge an Sulfonylchlorid ergibt (2,6 Mol, das sind 10,4 Mol pro
100 g Polymer).

Die Ueberlappt-Scherfestigkeiten werden an Testverklebungen
gemessen, die wie folgt hergestellt werden. Auf ein "Zincrometal"-
Stück mit den Abmessungen 2,54 cm x 10,16 cm x 0,152 cm wird die
Klebstoffmischung (ohne Beschleuniger) gegeben. Der Beschleuniger,
eine Lösung von 0,05 Gew.% Vanadiumtrisacetylacetonat in einer Mischung
von Kondensationsprodukten aus Butyraldehyd und Anilin ("Vanax 808" der Vanderbilt Corporation) wird als dünner Film auf ein entfettetes, kaltgewalztes Stahlstück mit den Abmessungen 2,54 cm x 10,16 vm x 0,16 cm aufgebracht. Die beiden Substrate werden in einer Leimvorrichtung zusammengeklammert, so dass ein Leimauftrag mit den Abmessungen 2,54 cm x 1,27 cm x 0,0127 cm erhalten wird. Nach einer Stunde Härtung bei 21°C wird die Ueberlappt-Scherfestigkeit in einem Apparat ("Instrom", eingetragenes Warenzeichen) gemessen, dessen Backen mit einer Geschwindigkeit von 1,27 cm pro Minute auseinanderfahren. Es werden die folgenden Mittelwerte der Ueberlappt-Scherfestigkeit gemessen:

| Sulfonylchloridverbindung | Ueberlappt-Scherfestigkeit in MPa |
|---|---|
| p-Toluolsulfonylchlorid | 14,5 |
| p-Nitrobenzolsulfonylchlorid | 13,9 |
| p-Brombenzolsulfonylchlorid | 7,0 |
| p-Maleinimidobenzolsulfonylchlorid | 14,1 |
| 2-Phthalimido-1-äthanolsulfonylchlorid | 12,2 |
| 2-Acetamido-4-methyl-5-thiazolsulfonylchlorid | 11,6 |
| 3'-Chlorsulfonylacet-p-toluidid | 15,0 |
| α-Toluolsulfonylchlorid | 4,9 |
| N-Acetylsulfanilylchlorid | 13,9 |
| 2-Methylthio-6-benzothiazolsulfonylchlorid | 13,0 |
| m-benzoldisulfonylchlorid | 14,5 |

Beispiel 2: Eine Mischung mit einem anderen als dem in Beispiel 1 verwendeten ABS-Polymer besteht aus folgenden Bestandteilen: 2 g (1,95 Gew.%) p-Maleimidobenzolsulfonylchlorid, 54 g (52,68 Gew.%) Methylmethacrylat, 10 g (9,76 Gew.%) Methacrylsäure, 1 g (0,97 Gew.%) 1,3-Butylenglykoldimethacrylat, 0,5 g (o,49 Gew.%) Cumolhydroperoxid und 35 g (34,15 Gew.%) ABS-Polymer. Die Viskosität bei 25°C ist 57 Pa s (Brookfield-Viscosimeter, Spindel 17,8 cm, 4 Umdrehungen pro Minute). Wie im Beispiel 1 werden "Zincrometal"-Stücke mit entfetteten Stahlstücken verklebt und die Ueberlappt-Scherfestigkeiten gemessen:

| Härtungszeit bei 21°C | Ueberlappt-Scherfestigkeit in MPa |
|---|---|
| 1/2 Stunde | 11,4 |
| 1 Stunde | 14,7 |
| 24 Stunden | 16,2 |

Beispiel 3: Wie im Beispiel 2 werden Proben verklebt, wobei man beide Substrate, das "Zincrometal"- und das Stahl-Stück vor der Beschichtung mit dem Klebemittel und dem Beschleuniger in Walzöl taucht. Folgende Werte werden erhalten:

| Härtungszeit bei 21°C | Ueberlappt-Scherfestigkeit in MPa |
|---|---|
| 1 Stunde | 14,8 |
| 24 Stunden | 19,6 |

Beispiel 4: Man geht wie in Beispiel 3 beschrieben vor, mit der Aenderung, dass beide Substrate aus "Zincrometal" bestehen. Die Ueberlappt-Scherfestigkeit beträgt nach dem Härten bei 21°C während 1 Stunde 14,1 MPa.

Beispiel 5: Probestücke werden wie in den Beispielen 2 und 3 behandelt. Nach einer Härtung bei 21°C während 24 Stunden werden sie zusätzlich bei 200°C während einer Stunde nachgehärtet. Folgende Werte werden gemessen:

| Hitzebehandlung | Ueberlappt-Scherfestigkeit in MPa entfettete Oberfläche/ölige Oberfläche | |
|---|---|---|
| keine (Kontrolle) | 16,2 | 19,6 |
| eine Stunde bei 200°C | 14,4 | 14,6 |

Der Bruch erfolgt bei der erhitzten Probe zwischen dem zinkreichen organischen Material und dem damit beschichteten Stahl. Die Proben, welche lediglich bei Raumtemperatur härten (sowohl in diesem Beispiel wie auch in den vorangehenden Beispielen), brechen in der zinkreichen organischen Schicht.

Beispiel 6: Klebmittelzusammensetzungen werden gemäss Beispiel 2 hergestellt, mit der Ausnahme, dass das Methylmethacrylat durch ein gleiches Gewicht entweder von Aethylmethacrylat oder von n-Butylmethacrylat ersetzt wird. Probestücke werden gemäss Beispiel 1 hergestellt und geprüft. Nach der Härtezeit von 1 Stunde oder 24 Stunden bei 21°C werden die folgenden Werte gemessen:

| Monomer | Ueberlappt-Scherfestigkeit in MPa | |
| --- | --- | --- |
| | 1 Stunde Härtung/ | 24 Std. Härtung |
| Aethylmethacrylat | 11,7 | 18,9 |
| n-Butylmethacrylat | 9,2 | 15,5 |

Beispiel 7: Wie im Beispiel 2 beschrieben werden Proben hergestellt und geprüft, mit der Ausnahme, dass der Beschleuniger nur eine Mischung von Kondensationsprodukten aus Anilin und Butyraldehyd ist ("Vanax 808"). Die mittlere Ueberlappt-Scherfestigkeit nach dem Härten bei 21°C während 1 Stunde ist 11,9 MPa. Nach einer weiteren Härtung von 24 Stunden bei 21°C beträgt die mittlere Ueberlappt-Scherfestigkeit 18,3 MPa.

Beispiel 8: 100 Gewichtsteile der Klebmittelmischung von Beispiel 2 und 2,5 Gewichtsteile der Beschleunigermischung von Beispiel 1 werden vor der Verklebung gemischt. Diese Mischung wird auf ein "Zincrometal"-Stück gebracht, das hierauf mit einem Stück entfetteten Stahls wie in Beispiel 1 beschrieben verklebt wird. Nach dem Härten bei 21°C während 1 Stunde beträgt die mittlere Ueberlappt-Scherfestigkeit 17,2 MPa.

Beispiel 9: Einkomponentenklebstoff
1,4-Butandioldiglycidyläther werden einer Mischung gemäss Beispiel 2 in einer Konzentration von 5 Gew.% der Gesamtmischung zugegeben. Nach der in Beispiel 1 beschriebenen Arbeitsweise verklebt man ein "Zincrometal"-Stück mit einem entfetteten Stahlstück, mit der Ausnahme, dass keine Beschleunigerkomponente verwendet wird. Die Ueberlappt-Scherfestigkeit nach dem Härten bei 100°C während 1 Stunde beträgt 7,9 MPa.

Patentansprüche

1.     Verfahren zum Verbinden eines mit einem zinkreichen organischen Ueberzug versehenen Substrates, wobei der Ueberzug 80-95 Gew.%
Zink enthält, mit einem zweiten Substrat, indem man die Substrate
durch Verklebung vereinigt, dadurch gekennzeichnet, dass man die Substrate durch Härten eines Klebmittels, das, bezogen auf das Klebmittel

a) 30-90 Gew.% mindestens eines polymerisierbaren Vinylmonomeren,

b) 10-50 Gew.% eines Acrylnitril-Butadien-Styrol-Polymeren,

c) 0,05-10 Gew.% eines freie Radikale erzeugenden Polymerisationskatalysators,

d) 0,1-15 Gew.% eines mono- oder polyfunktionellen organischen Sulfonylchlorids und

e) 0-35 Gew.% eines Beschleunigers enthält, verklebt.

2.     Verfahren gemäss Patentanspruch 1, dadurch gekennzeichnet,
dass man ein Klebmittel ohne Beschleuniger e) verwendet und die
Härtung bei 80-250°C durchführt.

3.     Verfahren gemäss Patentanspruch 1, dadurch gekennzeichnet,
dass man die Bestandteile a), b), c) und d) des Klebmittels auf das
eine Substrat, den Beschleuniger e) auf das andere Substrat aufbringt,
die beiden Substrate mit den beschichteten Oberflächen zusammenfügt
und ohne Zufuhr von Wärme das Klebmittel aushärten lässt.

4.     Verfahren gemäss Patentanspruch 1, dadurch gekennzeichnet,
dass man eine oder beide der zu verklebenden Oberflächen der Substrate
mit den Bestandteilen a), b), c) und d) des Klebmittels beschichtet,
den Beschleuniger e) auf die Schicht oder die Schichten aufbringt und
die Substrate verklebt.

- 14 -                                    0025015

5.      Verfahren gemäss Patentanspruch 1, dadurch gekennzeichnet, dass die eine oder beide der zu verklebenden Oberflächen der Substrate mit dem Beschleuniger e), gegebenenfalls gelöst in einem inerten polymeren Träger, beschichtet, auf eine oder beide dieser Schichten die Bestandteile a), b), c) und d) des Klebmittels aufbringt und die Substrate zur Verklebung zusammenfügt.

6.      Verfahren gemäss Patentanspruch 1, dadurch gekennzeichnet, dass man unmittelbar vor dem Verkleben den Beschleuniger e) mit den übrigen Bestandteilen des Klebmittels mischt und mit der erhaltenen Mischung die eine oder beide der zu verklebenden Oberflächen der Substrate beschichtet.

7.      Verfahren gemäss Patentanspruch 1, dadurch gekennzeichnet, dass man als Bestandteil a) Acrylsäure, Acrylsäureester, Methacrylsäure, Methacrylsäureester oder Gemische davon verwendet.

8.      Verfahren gemäss Patentanspruch 7, dadurch gekennzeichnet, dass man Methacrylsäure, deren Methyl- oder Aethylester, 1,3-Butandioldimethacrylat, Aethylenglykoldimethacrylat oder Mischungen davon verwendet.

9.      Verfahren gemäss Patentanspruch 1, dadurch gekennzeichnet, dass man als Bestandteil c) ein organisches Peroxid, Hydroperoxid, eine organische Persäure oder einen Ester davon verwendet.

10.     Verfahren gemäss Patentanspruch 1, dadurch gekennzeichnet, dass man als Bestandteil d) ein Alkylsulfonylchlorid, ein aromatisches Sulfonylchlorid oder ein ein Heteroatom enthaltendes Sulfonylchlorid verwendet.

11.     Verfahren gemäss Patentanspruch 1, dadurch gekennzeichnet, dass man als Bestandteil e) ein Kondensationsprodukt eines Aldehyds mit einem primären Amin, insbesondere das Kondensationsprodukt von Butyraldehyd und Anilin oder Butyraldehyd und Butylamin, verwendet.

12.     Verfahren gemäss Patentanspruch 1, dadurch gekennzeichnet, dass die zu verklebenden Substrate aus Metall, insbesondere Stahl, sind.

13.     Verfahren gemäss Patentanspruch 1, dadurch gekennzeichnet, dass das zweite Substrat ein Metall, ein Polymer, Holz, Papier, Glas, Keramik oder ein mit einem zinkreichen organischen Stoff beschichtetes Material ist.